Europäisches Patentamt

European Patent Office

Office européen des brevets

(19)

(11) Veröffentlichungsnummer: **0 365 746**
**A1**

(12) # EUROPÄISCHE PATENTANMELDUNG

(21) Anmeldenummer: 89111818.4

(22) Anmeldetag: 29.06.89

(51) Int. Cl.5: **F16K 1/18**

(30) Priorität: 27.10.88 DE 3836861

(43) Veröffentlichungstag der Anmeldung:
02.05.90 Patentblatt 90/18

(84) Benannte Vertragsstaaten:
AT BE CH DE FR GB IT LI LU NL SE

(71) Anmelder: **Stober + Morlock Wärmekraft**
**Gesellschaft mbH**
**Otto-Burrmeister-Allee 24**
**D-4350 Recklinghausen(DE)**

(72) Erfinder: **von Erichsen, Volker**
**Otto-Burrmeister-Allee 24**
**D-4350 Recklinghausen(DE)**

(74) Vertreter: **Honke, Manfred, Dr. et al**
**Patentanwälte Andrejewski, Honke & Partner**
**Theaterplatz 3 Postfach 10 02 54**
**D-4300 Essen 1(DE)**

(54) **Absperrvorrichtung für Kanäle mit grossen Querschnitten, insbesondere Rauchgaskanäle.**

(57) Bei Absperrvorrichtungen für Kanäle mit grossen Querschnitten, insbesondere Rauchgaskanäle für Kraftwerksanlägen welche mindestens eine entweder in den oder innerhalb der Kanalwände über mindestens eine Drehklappenwelle (22) gelagerte Klappe (2) aufweist, die mittels mindestens einer Antriebswelle (5) sowie mit aus Kurbelarmen (8) und Spannarmen (9) bestehenden Spannhebelanordnungen (7) schwenkbar sind, ist es notwendig, dass bei Absperrvorrichtungen mit mehreren Klappen (2) zur Ansteuerung einer Klappe (2) jeweils eine Antriebswelle (5) vorhanden ist. Durch die Querverlagerung der Antriebswelle (5) kann mittels der an der Antriebswelle (5) angeordneten Spannhebelanordnungen (7) die Absperrvorrichtung über eine Antriebswelle (5) geöffnet oder geschlossen werden.

F i g.1

## Absperrvorrichtung für Kanäle mit grossen Querschnitten, insbesondere Rauchgaskanäle.

Die Erfindung betrifft eine Absperrvorrichtung für Kanäle mit grossen Querschnitten, insbesondere Rauchgaskanäle für Kraftwerksanlagen, welche mindestens eine entweder in den oder innerhalb der Kanalwände über mindestens eine Drehklappenwelle gelagert Klappe aufweist, die mittels mindestens einer Antriebswelle sowie mit aus Kurbelarmen und Spannarmen bestehenden Spannhebelanordnungen schwenkbar ist.

Derartige Absperrvorrichtungen sind in verschiedenen Ausführungsformen bekannt. Derartige Absperrvorrichtungen weisen dabei mindestens zwei Klappen auf, wenn sie bei Kraftwerken und dort insbesondere im Abgas- oder Rauchgasbereich verwendet werden, ausserordentlich grosse Querschnitte von 100 m² und mehr auf, wodruch erhebliche Probleme beim Bewegen dieser grossen Klappenflügel und bei ihrem Anpressen gegen die im Kanal liegenden Dichtungen auftreten. Deshalb ist es erforderlich, mindestens zwei Klappen zur Abschottung des Rauchgasstromes in einem Kanalquerschnitt der Grösse einzubauen. Um die kinetische Energie der Rauchgase beim Schliessvorgang der Flügelklappen aufzufangen und zur Bewegung der grossen Massen der Flügelteile wird jedem Flügelteil eine Antriebswelle zugeordnet. Die jedem Flügelteil zugeordnete Antriebswelle ist dabei parallel zur Schwenkachse der Klappe drehbar gelagert. Dabei wird jeder Antriebswelle ein entweder innenliegender Antrieb oder aussen liegender Antrieb zugeordnet. Dadurch, dass jeder Klappe oder Flügelteil eine Antriebswelle zugeordnet ist, bedeutet das, dass im geöffneten Zustand der Absperrvorrichtung die im Kanalquerschnitt gelagerten Wellen einen Strömungswiderstand bilden. Weiterhin sind innenliegende Antriebsaggregate dem aggressiven Rauchgasem Strömungskanal ausgesetzt. Diese Anordnung einer Absperrvorrichtung in derart grossen Querschnitten führt zu einem erheblichen baulichen Aufwand und dementsprechend hohen Kosten.

Der Erfindung liegt daher die Aufgabe zugrunde, für diesen Zweck eine Absperrvorrichtung so auszubilden, dass mit geringem Aufwand Klappen derartiger Grösse in einem Rauchgaskanal bewegt werden können, so dass sich insgesamt niedrige Bau- und Wartungskosten ergeben.

Gegenstand der Erfindung ist daher eine Absperrvorrichtung für Kanäle mit grossen Querschnitten, insbesondere Rauchgaskanäle für Kraftweken derart auszubilden, dass bei einer mindestens zwei Klappen aufweisenden Absperrvorrichtung die Antriebswelle quer zur Drehklappenwelle angeordnet ist.

Durch eine Querverlagerung der Antriebswelle im Kanalquerschnitt ist es möglich geworden, über Spannhebelanordnungen welche Klappen und Antriebswelle verbinden, als Öffnungsorgan nur eine Welle im Querschnitt anzuordnen. Dadurch ist erreicht worden, dass zum einen der bauliche Aufwand derartiger Absperrvorrichtungen gesenkt werden kann und zum anderen die Strömungsverluste bei geöffnetem Zustand der Absperrvorrichtung verringert werden.

Vorzugsweise ist dabei die Antriebswelle vor der Klappenanordnung im Kanalquerschnitt drehbar gelagert. Dadurch, dass die Antriebswelle über ein ausserhalb des Kanalquerschnitts angebrachtes Antriebsaggregat antreibbar ist wird erreicht, dass entweder ein E-Antrieb oder Hydraulikantrieb vor den aggressiven Rauchgasen geschützt wird. Der Verschleiss und der Wartungsaufwand derartiger Aggregate kann dadurch erheblich gesenkt werden, was wiederum entsprechende Kostenvorteile mit sich bringt.

Nach einer Weiterbildung der Erfindung ist es zweckmässig, dass sich bei Klappen mit grosser Höhe parallel zueinanderliegende Antriebswellen im Kanalquerschnittsbereich befinden und die Antriebswellenenden über eine quer dazu liegende ausserhalb des Kanalquerschnitts über Getriebe verbindende Antriebswellen antreibbar sind. Bei Klappen mit grosser Höhe, welche einem derartigen Kanalquerschnitt angepasst sind, können aufgrund der Anordnung von nur einer Antriebswelle während des Schliess- und Öffnungsvorganges grosse Biegemomente durch die kinetische Energie der Rauchgase auftreten. Zur Ausschaltung derartiger Biegemomente bietet sich an, die Klappen zu versteifen was jedoch den Nachteil mit sich bringt, dass die Klappen ein hohes Eigengewicht bekommen. Zur Lösung bietet sich daher an, bei derartigen Klappenhöhen zwei parallel zueinanderliegende Antriebswellen im Kanalquerschnittsbereich anzuordnen und die durch die Kanalwände durchtretenden Wellenenden über eine quer dazu angeordnete Antriebswelle und verbindenden Getrieben anzutreiben. Dadurch, dass im oberen Bereich und im unteren Bereich der hohen Klappen eine Antriebswelle angeordnet ist, können somit die auftretenden Biegemomente beim Öffnungs- und Schliessvorgang der Sperrvorrichtung ausgeschaltet werden und eine Überdimensionierung der Klappenflügel ist nicht mehr erforderlich.

Vorzugsweise sind mehrere Spannhebelanordnungen, welche die Klappe oder Klappen mit der oder den Antriebswellen gelenkig verbinden auf der oder den im Kanalquerschnitt gelagerten Antriebswellen befestigt. Durch die Anbringung oder Befestigung mehrerer Spannhebelanordnungen auf der quer gelagerten Antriebswelle ist es möglich geworden, dass mehrere Klappenflügel im Kanalquerschnitt angesteuert werden können.

Nach einer Weiterbildung der Erfindung sind die Kurbelarme der Spannhebelanordnung drehfest mit der bzw. den Antriebswellen verbunden, wobei das freie Ende des Kurbelarmes senkrecht zur Ebene der geschlossenen Klappe steht und ein Spannarm die Klappe mit dem freien Ende des Kurbelarmes gelenkig verbindet. Dadurch, dass der oder die Kurbelarme senkrecht zur Ebene der geschlossenen Klappe stehen ist gewährleistet, dass die Kurbelarme nach einer Öffnungsschwenkbewegung um 180° in Strömungsrichtung des Rauchgases weisen. Dadurch ergeben sich keine zusätzlichen Strömungswiderstände im Kanalquerschnitt.

Nach einer Weiterbildung der Erfindung besteht die Möglichkeit, die Drehklappenwellen zentrisch in der Längsachse anzuordnen, wobei die Spannarme der Spannhebelanordnung aussermittig zur Längsachse angreifen. Bei einer derartigen Bauausführung ist es vorteilhaft, einen Gelenkhebel mit der zentrisch gelagerten Längsachse einer Jalousieklappe drehfest zu verbinden und in einem Winkel zur Klappenebene anzuordnen, wobei das freie Ende des Gelenkhebels mit dem Spannarm gelenkig verbunden ist.

Bei einer vorteilhaften Weiterbildung der Erfindung ist es zweckmässig, bei einem zueinander senkrecht liegenden Kanal abzweig in jedem Abzweig mindestens eine Antriebswelle anzuordnen und im Schnittpunkt der beiden Wellen ausserhalb des Kanalzweiges ein Getriebe, beispielsweise Kegelradgetriebe, die beiden Antriebswellen drehbar zu verbinden und beide Antriebswellen über ein Antriebsaggregat anzutreiben. Dadurch wird erreicht, dass die beiden Kanalzweige wechselseitig geöffnet und geschlossen werden können und somit die Gesamt anordnung der Kanalverzweigung die Wirkungsweise einer Weiche zur Umleitung von Rauchgasströmen in Kanälen mit grossen Querschnitten besitzt.

Ein Ausführungsbeispiel gemäss der Erfindung ist im folgenden anhand der Zeichnung dargestellt. Darin zeigt

Fig. 1 in schematischer und perspektivischer Darstellung die Antriebsseite einer mehrflügeligen Schwenkklappenanordnung mit einer zur Drehrichtung der Klappen querliegenden Antriebswelle und entsprechendem Klappengestänge,

Fig. 2 eine Darstellung gemäss Fig. 1 mit zwei parallel zueinander liegenden Antriebswellen,

Fig. 3 eine weitere Ausführungsform der Erfindung einer Teildraufsicht mit zentrisch gelagerten Jalousieklappen,

Fig. 4 eine Weiterbildung der Darstellung gemäss Fig. 3,

Fig. 5 eine zweiflügeige Absperrklappe für kreisförmige Querschnitte gemäss der Erfindung in der Draufsicht,

Fig. 6 einen senkrechten Schnitt entsprechend der Linie VI-VI der Fig. 5,

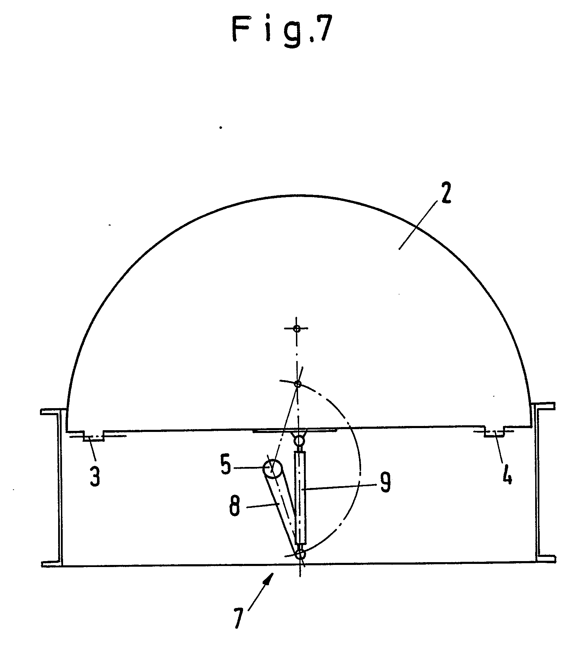

Fig. 7 einen senkrechten Schnitt der Linie VII-VII der Fig. 6,

Fig. 8 eine Draufsicht einer Klappkombination gem. der Erfindung mit zwei zueinander rechtwinklig angeordneten Antriebswellen und einem Antrieb.

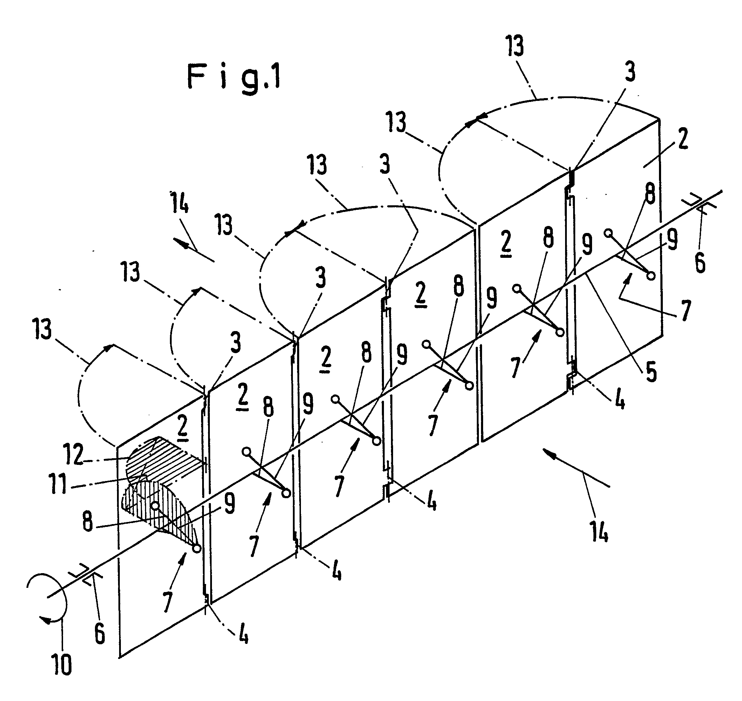

In der Zeichnung Fig. 1 ist eine mehrflügelige Schwenkklappenanordnung in ihrer Gesamtheit mit 1 bezeichnet. Die Schwenkklappenanordnung 1 wird insbesondere in Kanälen mit grossen Rechteckquerschnitten (beispielsweise in Rauchgaskanälen von Kraftwerken) zur Abschottung eines Rauchgasstromes verwendet. Die Einzelklappen der Schwenkklappenanordnung 1 sind mit 2 bezeichnet. Die Einzelklappen 2 sind über Scharniere 3 und 4 schwenkbar im Rauchgaskanal angeordnet. In der Zeichnung schematisch dargestellte Drehklappenwellen sind entweder ausserhalb oder aber innerhalb der Kanalwände gelagert bzw. befestigt. Dabei kann auf einer Drehklappenwelle eine links und eine rechtsöffnende Klappe 2 schwenkbar angeordnet sein. Eine weitere Ausführungsmöglichkeit ist, dass jeder Klappe 2 eine Drehklappenwelle zugeordnet ist. Eine Antriebswelle 5 ist quer zur Drehrichtung der Klappen 2 vor der Schwenkklappenanordnung 1 angeordnet. Die Antriebswelle 5 ist in Lagern 6 drehbar gelagert. Spannhebelanordnungen 7 verbinden die Einzelklappen 2 mit der Antriebswelle 5. Auf der Antriebswelle 5 sind Kurbelarme 8 drehfest angebracht. Die Kurbelarme 8 sind auf der Antriebswelle 5 so befestigt, dass sie mit ihrem freien Ende zur Ebene der Klappe 2 senkrecht stehen. Mit den freien Enden der Kurbelarme 8 sind Spannarme 9 gelenkig verbunden, wobei dessen anderes Ende über ein Gelenk an der zugehörigen Klappe 2 angreift.

Wird über ein in der Zeichnung nicht dargestelltes Antriebsaggregat die Antriebswelle 5 gegen den Uhrzeigersinn um 180° gedreht, so schwenkt das freie Ende des Kurbelarmes 8 entsprechend der Raumkurve 11 auf die gegenüberliegende Seite. Während dieses Schwenkvorganges legt der Gelenkpunkt, an welchem der Spannarm 9 mit der Klappe 2 gelenkig verbunden ist einen Weg, entsprechend der Raumkurve 12 zurück.

Durch die Spannhebelanordnung 7 auf der Antriebswelle 5 werden nach einer Drehung der Antriebswelle 5 um 180° die Klappen 2 in Strömungsrichtung 14 geöffnet. Um wieder die Schließstellung der Klappen 2 zu erreichen, wird die Antriebswelle 5 im Sinne der Pfeilrichtung 10 mit dem Uhrzeigersinn gedreht. Während der Schliess- und Öffnungsbewegung der Klappen 2 legen die freien Eckpunkte der Klappen 2 einen Weg entsprechen der strichpunktierten Linie 13 zurück.

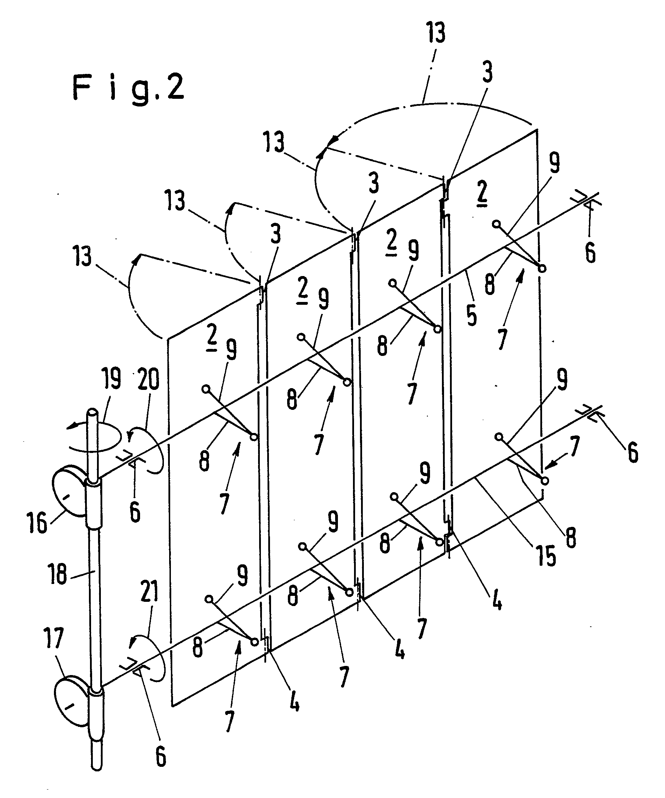

Fig. 2 zeigt eine mehrflügelige Schwenkklappenanordnung, bei der die Klappen 2 eine verhältnismässig grosse Höhe aufweisen. Zur Ansteuerung dieser hohen Klappen 2 sind zwei Antriebswellen 5 und 15 parallel zueinander quer zur Drehrichtung der Klappen 2 angeordnet. Beide Antriebswellen 5 und 15 öffnen und schliessen wie bereits in Fig. 1 beschrieben über Spannhebelanordnungen 7 die Klappen 2. Getriebe 16 und 17 verbinden die Antriebswelle 5 und die Antriebswelle 15 mit einer quer dazu liegenden Antriebswelle 18. Wird über ein in der Zeichnung nicht dargestelltes Antriebsaggregat ein Moment im Sinne der Pfeilrichtung 19 auf die Antriebswelle 18 gebracht, so wird der Kraftschluss über die Getriebe 16 und 17 auf die Antriebswellen 5 und 15 weitergeleitet, so dass die Kurbelarme 8 im Sinne der Pfeilrichtung 20 und 21 verschwenkt werden.

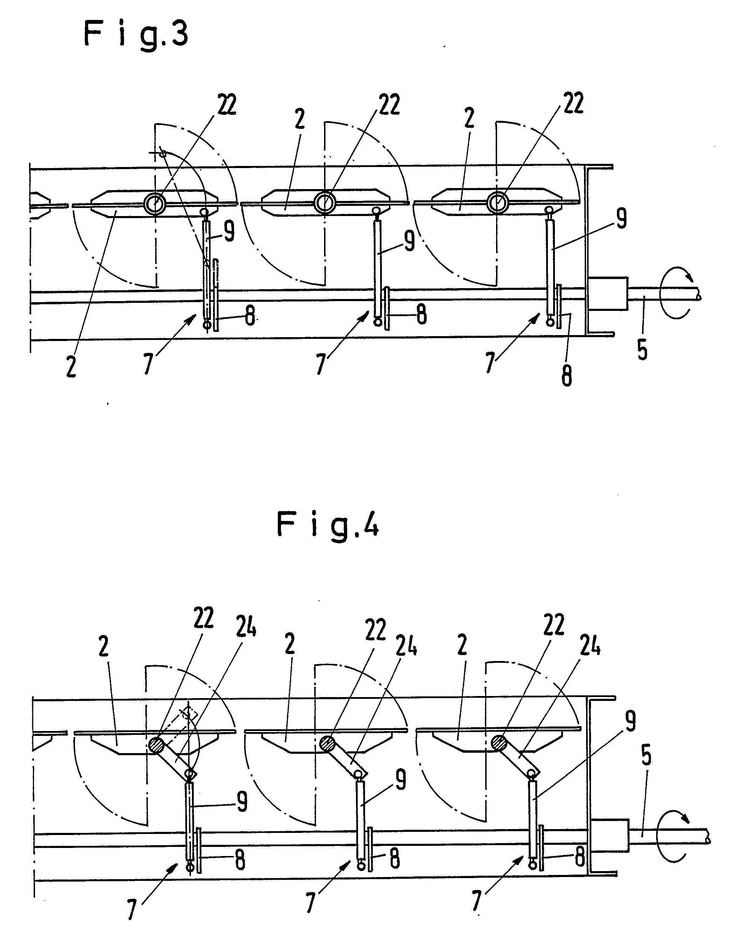

Bei dem Ausführungsbeispiel gemäss Fig. 3 sind Drehklappenwellen 22 mittig in der Längsache der Klappen 2 angebracht. Über die Spannhebelanordnung 7 ist die quer zur Drehrichtung liegende Antriebswelle 5 gelenkig mit den Klappen 2 verbunden. Hierbei ist die Anordnung der Spannhebelanordnung 7 so gewählt, dass der Spannarm 9 an einem Gelenkpunkt auf der Klappe 2 angreift, welcher ausser mittig liegt.

Beim Ausführungsbeispiel gem. Fig. 4 ist ein Gelenkhebel 24 drehfest mit der Drehklappenwelle 22 verbunden. Am freien Ende des Gelenkhebels 24 greift in gleicher Weise wie in Fig. 3 der Spannarm 9 an.

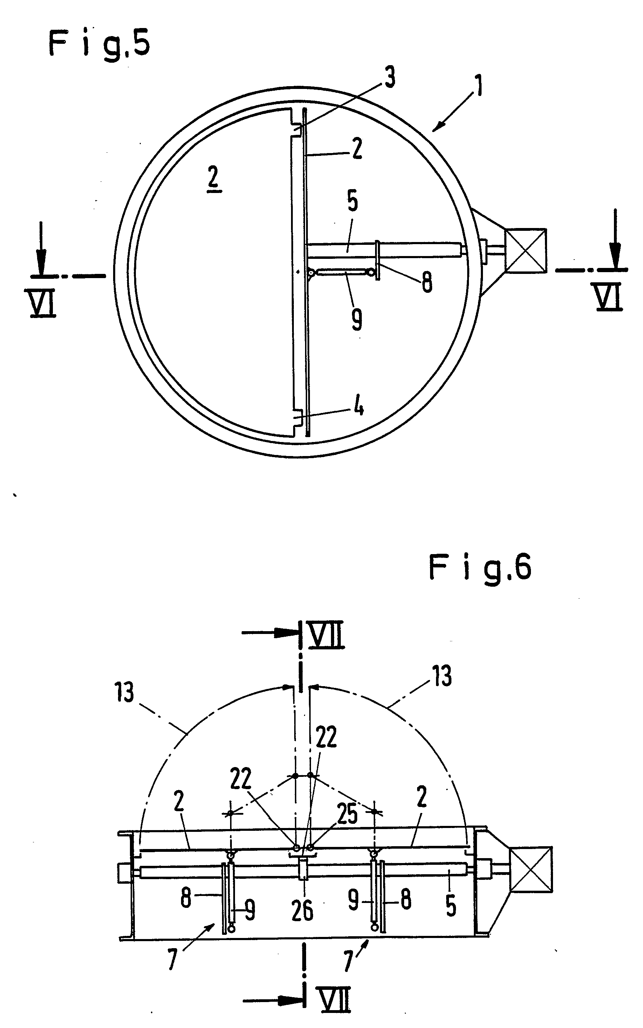

Die Fig. 5 zeigt eine Schwenkklappenanordnung 1 für runde Querschnitte, bei der zwei halbkreisförmige Klappen 2 jeweils über eine Drehklappenwelle 22 schwenkbar angeordnet sind. Die Drehklappenwellen 22 sind mittig in Längsrichtung parallel im Kreisquerschnitt gelagert. Quer dazu um 90° versetzt, ist die Antriebswelle 5 parallel zur Mittelachse versetzt angeordnet. In der Mittelachse ist ein Steg 25 unterhalb der Drehklappenwellen gelagert. An dem Steg 25 ist ein weiterer Lagerpunkt 26 angebracht. Der Schwenkmechanismus zum Schliessen oder zum Öffnen der Klappen vollzieht sich wie in der eingangs beschriebenen Art.

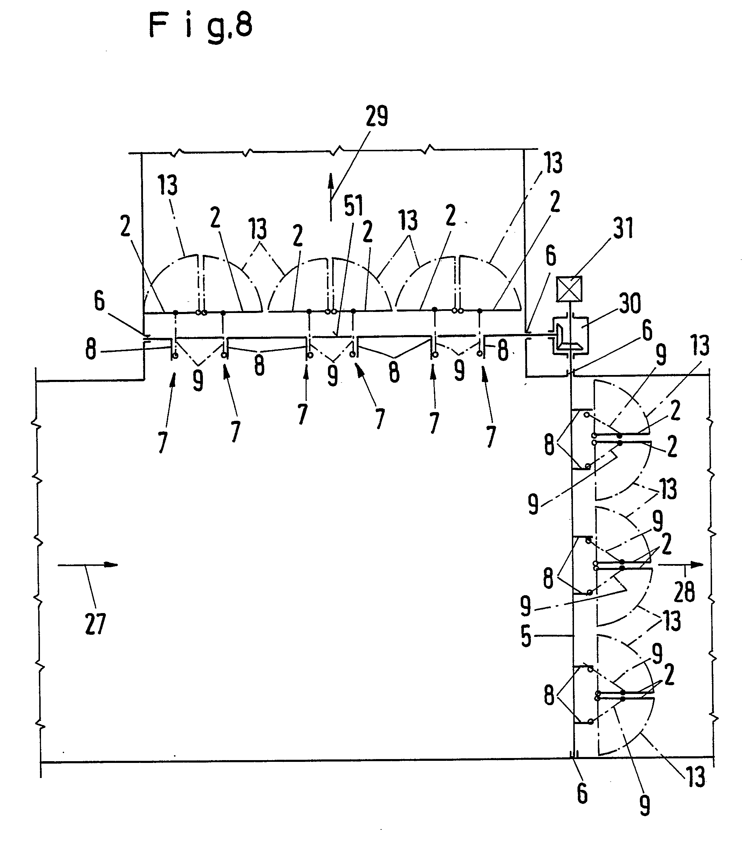

Eine weitere Ausführungsform des Absperrorganes gemäss der Erfindung zeigt Fig. 8. Hier können die aus der Richtung des Pfeils 27 kommenden Rauchgase in Richtung des Pfeiles 28 zu einem Wärmetauscher weitergeleitet werden oder aber durch Betätigen der Absperrorgane die Rauchgase umgeleitet werden in Richtung des Pfeiles 29 zum Kamin. Zur Betätigung der Absperrorgane sind in jedem Kanalzweig 28,29 jeweils eine Antriebswelle 5 und 51 angeordnet. Im Schnittpunkt der zueinander senkrecht stehenden Wellen 5 und 51 ist ein Kegelradgetriebe 30 angeordnet. Mit dem Kegelradgetriebe 30 ist ein Antriebsaggregat 31 drehbar verbunden. Wird das Antriebsaggregat 31 betätigt, so schliessen die Klappen 2 im Rauchgaskanal zum Wärmetauscher und gleichzeitig werden die Klappen 2 im Rauchgaskanal zum Kamin geöffnet. Dadurch lässt sich auf einfache Weise eine Rauchgasumlenkung mit zwei Antriebswellen 5 und 51 und einem Antriebsaggregat 31 erzielen, wobei die beiden Kanalzweige sechselseitig geöffnet und geschlossen werden können. Die Gesamtanordnung der Kanalverzweigung hat somit die Wirkungsweise einer Weiche zur Umleitung von Rauchgasströmen in Kanälen mit grossen Querschnitten.

## Ansprüche

1. Absperrvorrichtung für Kanäle mit grossen Querschnitten, insbesondere Rauchgaskanäle für Kraftwerksanlagen, welche mindestens eine entweder in den oder innerhalb der Kanalwände über mindestens eine Drehklappenwelle gelagerte Klappe aufweist, die mittels mindestens einer Antriebswelle sowie mit aus Kurbelarmen und Spannarmen bestehenden Spannhebelanordnungen schwenkbar ist, dadurch gekennzeichnet, dass bei einer mindestens zwei Klappen (2) aufweisenden Absperrvorrichtung (1) die Antriebswelle (5) quer zur Drehklappenwelle (22) angeordnet ist.

2. Absperrvorrichtung nach Anspruch 1, dadurch gekennzeichnet, dass die Antriebswelle (5) vor der Klappenanordnung (1) im Kanalquerschnitt drehbar gelagert ist.

3. Absperrvorrichtung nach einem oder mehreren der Ansprüche 1 - 2, dadurch gekennzeichnet, dass die Antriebswelle (5) über ein ausserhalb des des Kanalquerschnitts angebrachtes Antriebsaggregat (31) antreibbar ist.

4. Absperrvorrichtung nach einem oder mehreren der Ansprüche 1 - 3, dadurch gekennzeichnet, dass sich bei Klappen (2) mit grosser Höhe parallel zueinanderliegende Antriebswellen (5, 15) im Kanalquerschnittsbereich befinden und die Antriebswellenenden über eine quer dazu liegende ausser halb des Kanalquerschnitts über Getriebe (16, 17) verbindende Antriebswelle (18) antreibbar sind.

5. Absperrvorrichtung nach einem oder mehreren der Ansprüche 1 - 4, dadurch gekennzeichnet, dass auf der oder den im Kanalquerschnitt gelagerten Antriebswellen (5, 15) mehrere Spannhebelanordnungen (7), welche die Klappe (2) oder Klappen (2) mit der oder den Antriebswellen (5, 15) gelenkig verbinden, befestigt sind.

6. Absperrvorrichtung nach einen oder mehreren der Ansprüche 1 - 5, dadurch gekennzeichnet, dass die Kurbelarme (8) der Spannhebelanordnung (7) drehfest mit der bzw. den Antriebswellen (5, 15) verbunden ist, wobei das freie Ende des Kurbelarmes (8)senkrecht zur Ebene der geschlossenen Klappe (2) steht und ein Spannarm (9) die Klappe (2) mit dem freien Ende des Kurbelarmes (8) gelenkig verbindet.

7. Absperrvorrichtung nach einem oder mehreren der Ansprüche 1 - 6, **dadurch gekennzeichnet**, dass bei in der zentrischen Längsachse gelagerten Jalousieklappen (2) die Spannarme (8) der Spannhebelanordnung (7) aussermittig zur Längsachse angreifen.

8. Absperrvorrichtung nach Anspruch 7, **dadurch gekennzeichnet**, dass ein Gelenkhebel (24) mit der zentrisch gelagerten Längsachse der Jalousieklappe (2) drehfest verbunden ist und in einem Winkel zur Klappenebene angeordnet ist, wobei das frei Ende des Gelenkhebels (24) mit dem Spannarm (8) gelenkig verbunden ist.

9. Absperrvorrichtung nach einem oder mehreren der Ansprüche 1 - 6, **dadurch gekennzeichnet**, dass bei einem zueinander senkrecht liegenden Kanalabzweig in jedem Abzweig (28, 29) mindestens eine Antriebswelle (5, 51) angeordnet ist und im Schnittpunkt der beiden Wellen ausserhalb des Kanalabzweiges ein Getriebe (30), beispielsweise Kegelradgetriebe, die beide Antriebswellen (5, 51) drehbar verbindet und beide Antriebswellen über ein Antriebsaggregat (31) antreibbar sind.

# F i g.1

F i g.2

# Fig.3

# Fig.4

# Fig.5

# Fig.6

# Fig.7

# F i g.8